# EUROPÄISCHE PATENTSCHRIFT

(11) **EP 4 253 210 B1**
(45) Veröffentlichungstag und Bekanntmachung des Hinweises auf die Patenterteilung: **02.10.2024**
(21) Anmeldenummer: 23166342.8
(22) Anmeldetag: 03.04.2023
(51) Int. Cl.: B62J 11/13, B62L 3/02, B62L 1/12

(54) **BREMSHUBRINGSYSTEM**
BRAKE LIFTING RING SYSTEM
SYSTÈME D'ANNEAU DE LEVAGE DE FREIN

(30) Priorität: 01.04.2022 LU 102924
(43) Veröffentlichungstag der Anmeldung: 04.10.2023
(73) Patentinhaber: Hopper Mobility GmbH, 86154 Augsburg (DE)
(72) Erfinder: Halama, Martin, 86154 Augsburg (DE)
(74) Vertreter: Gruner, Leopold Joachim

(56) Entgegenhaltungen:
- DE-A1- 102004 053 504
- DE-U1- 202012 101 466
- JP-A- 2009 173 162
- US-A- 5 605 076
- US-A1- 2002 069 721
- US-A1- 2016 039 490
- US-B1- 6 422 353

## Beschreibung

### TECHNISCHES GEBIET

Die Erfindung betrifft ein Bremshubringsystem zur Übertragung eines durch einen Fahrer bewirkten Bremshubes an ein Bremssystem eines Fahrzeugs mit den Merkmalen des Anspruches 1.

### STAND DER TECHNIK

Von BMX-Fahrrädern ist ein Lenksystem bekannt, welches eine rotatorische Entkopplung der Bremszüge erlaubt. Anstelle einer direkten Verbindung zu den hinteren Bremssätteln ist es üblich, ein Paar ringförmiger Rotoren vorzusehen, die konzentrisch in Bezug auf den Vordergabelschaft angeordnet sind, wobei die Kabelsegmente so angeordnet sind, dass die relative Drehbewegung zwischen den Rotoren nicht behindert wird, während die axiale Bewegung der Verbindungskabel von einem oberen Rotor, der mit dem Lenkerhebel verbunden ist, auf den unteren Rotor übertragen wird, der mit den zum hinteren Bremssattel führenden Kabeln verbunden ist. Solche Systeme sind beispielsweise bekannt aus der US4653768A, JP1987247989A, US4770435A und der US5992869A.

Allerdings ist diesen Systemen nachteilig, dass sie nur für die Anwendung bei Fahrzeugen wie Fahrrädern vorgesehen sind, deren Lenker mit beiden Händen eines Fahrers gegriffen werden, wobei auch die Bremshebel mit jeweils einer Hand gegriffen werden müssen, um die Bremszüge zu betätigen.

Die JP2009173162A beschreibt eine Lösung, bei der ein ringförmig ausgestalteter, nicht drehbarer, Bremshebel unter einem kreisrunden Lenkrad angeordnet ist. Aufgrund der kreisrunden Form des Bremshebels, können die Bremszüge aus jedem Winkel, also unabhängig davon, wie weit das Lenkrad gedreht ist, betätigt werden.

Jedoch ist die vorgeschlagene Lösung kompliziert im Aufbau und erfordert eine Vielzahl an Bauteilen. So ist beispielsweise eine Hebelführung unterhalb des Bremshebels vorgesehen, welche den Bremshebel stützt. Weiterhin folgt der Umfang des Bremshebels nicht vollständig der Lenkradbewegung, da aufgrund der Konstruktion unter Verwendung der Hebelführung nur eine Teilkreisrotation möglich ist. Dies kann von einem Fahrer als störend empfunden werden, wenn seine Handballen auf dem Lenkrad aufliegen und der Bewegung des Lenkrads folgen und die Finger, welche den Bremshebel kontaktieren, auf dem Bremshebel schleifen. Zudem ist die vorgeschlagene Konstruktion voluminös, wodurch nachteilig viel Platz eingenommen wird und es aufgrund der aufwändigen Ausgestaltung auch wartungsanfällig ist.

### AUFGABE

Es ist daher Aufgabe der vorliegenden Erfindung ein System bereitzustellen, die es erlaubt einen Bremshub so auszuführen, dass dieser unabhängig von der Position eines Lenkrades ausgeführt werden kann. Dabei soll das Mittel, dass von einem Fahrer zum Ausführen des Bremsvorganges betätigt wird, frei drehbar um die Längsachse der Lenkerachse sein. Zudem soll ein System bzw. eine Vorrichtung bereitgestellt werden, deren einfache Konstruktion eine kompakte Ausführung erlaubt.

### LÖSUNG

Die Aufgabe wird mit einem Bremshubringsystem mit den Merkmalen des Anspruchs 1 sowie durch den Gegenstand des nebengeordneten Anspruchs erfüllt. Weitere vorteilhafte Ausgestaltungen sind den Unteransprüchen, der Beschreibung und den Ausführungsbeispielen zu entnehmen.

### ALLGEMEINE VORTEILE

Vorteilhaft kann dadurch, dass ein Mittel, insbesondere einen Bremshubring (3.0) vorgesehen ist, das bzw. der von einem Fahrer zum Ausführen des Bremsvorganges betätigt wird, frei drehbar um die Längsachse der Lenkerachse ausgelegt ist, mit der Erfindung erreicht werden, dass ein Fahrzeug während einer Kurvenfahrt gebremst werden kann. Dabei kann sich der Bremshubring frei um die Längsachse der Lenkerachse bewegen, wodurch die Finger des Fahrers bei einer Drehbewegung des Lenkers nicht auf dem Bremshubring schleifen. Zudem erlaubt das System eine kompakte Ausgestaltung, bei dem keine zusätzliche Stützkonstruktion erforderlich ist.

### BESCHREIBUNG DER ERFINDUNG

Die Erfindung betrifft ein Bremshubringsystem (1.0) zur Übertragung eines durch einen Fahrer bewirkten Bremshubes an ein Bremssystem eines Fahrzeugs, das einen Fahrzeugrahmen umfasst, wobei das System einen Bremshubring umfasst, der dazu eingerichtet ist, durch einen Fahrer des Fahrzeugs in Richtung eines Lenkrades gezogen zu werden, wobei der Bremshubring um eine Lenkerachse angeordnet ist, wobei das Bremshubringsystem dadurch gekennzeichnet ist, dass der Bremshubring mit einer Bremshubring-Führungsstruktur verbunden oder verbindbar ist, wobei die BremshubringFührungsstruktur entlang der Lenkerachse axial verschiebbar und um die Lenkerachse radial rotierbar angeordnet ist.

Das erfindungsgemäße Fahrzeug kann von einem Fahrer per Muskelkraft, bevorzugt über Pedale angetrieben werden. Das Fahrzeug kann zumindest drei Räder (Dreirad) umfassen. An der Achse von zumindest zwei Rädern, bevorzugt Rädern, die auf der gleichen Achse zueinander gegenüber angeordnet sind, ist ein Bremssystem angeordnet. Bevorzugt wird ein Bremssystem verwendet, wie man es bspw. bei Fahrrädern vorfindet. Bspw. genannt seien hier Scheibenbremsen, Felgenbremsen, V-Bremsen, Cantilever-Bremsen, U-Bremsen, Seitenzugbremsen.

Ein Bremsvorgang wird erfindungsgemäß durch einen Bremshub durch den Fahrer ausgelöst. Ein Bremshub erfordert eine Aufwendung einer Bremskraft des Fahrers. Die Übertragung der Bremskraft an das Bremssystem erfolgt bevorzugt über einen Seilzug, der auch als Bowdenzug bekannt ist. Der Bowdenzug besteht im Wesentlichen aus einem dünnen Stahlseil, das von einer druckfesten Außenhülle ummantelt wird.

Das Fahrzeug umfasst ein Lenkrad (2.1), das an einem Ende einer Lenkerachse (2.2) angeordnet ist, wobei die Lenkerachse in einem Fahrzeugrahmen (2.0) drehbar gelagert ist und um die eigene Achse rotieren kann. Als Fahrzeugrahmen wird hierin die Lenkerachse tragende Struktur verstanden. Das Lenkrad kann mit einem geschlossenen, beispielsweise kreisrunden, Umfang ausgebildet sein, an dem der Fahrer das Lenkrad und die damit verbundene Lenkachse drehen kann. Statt radförmigen Lenkern können jedoch auch andere Lenkerformen vorgesehen sein, die eine Rotation der Lenkerachse für die Lenkung des Fahrzeuges erlauben.

Weiterhin umfasst das Bremshubringsystem einen Bremshubring (3.0), der die gleiche Mittelachse aufweist, wie das Lenkrad und so hinter dem Lenkrad angeordnet ist, dass der Fahrer den Bremshubring mit den Fingern greifen kann, während die Handflächen und/oder die Daumen das Lenkrad kontaktieren. Vorteilhaft kann somit erreicht werden, dass der Fahrer zum Bremsen die Hände nicht vom Lenkrad nehmen muss.

Der Bremshubring ist mit einer Bremshubring-Führungsstruktur (3.1) verbunden oder verbindbar. Dabei handelt es sich bei der Erfindung bevorzugt um eine formschlüssige oder stoffschlüssige Verbindung.

Beispielsweise kann die Bremshub-Führungsstruktur, sowie der Bremshubring über einen Klick- oder Schnappmechanismus miteinander formschlüssig und reversibel verbunden werden, wobei die Verbindung gelöst werden kann, indem ein Taster des Klick- oder Schnappmechanismus gedrückt wird. Vorteilhaft kann dadurch erreicht werden, dass der Bremshubring sehr einfach und auch ohne Werkzeug, von der BremshubringFührungsstruktur abgetrennt werden kann.

Bei einer stoffschlüssigen Verbindung können der Bremshubring und die BremshubringFührungsstruktur miteinander verschweißt sein, wodurch vorteilhaft eine stabile Verbindung erreicht wird, die gegen Erschütterungen, bei bestimmungsgemäßem Gebrauch, resistent ist.

Die Bremshubring-Führungsstruktur ist, wie auch der Bremshubring, entlang der Lenkerachse axial verschiebbar und um diese radial rotierbar, wobei die axiale Verschiebung durch die Position des Lenkrades in der einen Richtung und durch den Fahrzeugrahmen in der anderen Richtung begrenzt ist. Radial rotierbar bedeutet dabei in Umfangsrichtung der Lenkerachse um die Lenkerachse rotierbar.

In einer Ausführungsform umfasst die Bremshubring-Führungsstruktur ein längliches Ringelement (3.5), welches mit dem Bremshubring verschraubt ist, wodurch ein axialer und radialer Formschluss gegeben ist. Innerhalb der Ringelements sind, in der dem Fahrzeugrahmen zugewandten Seite des Ringelements, zumindest zwei Gewindebohrungen angeordnet, in welche Stabelemente (3.6) platziert werden können, die mit einem weiter unten beschriebenen Entkoppler verbunden werden können.

Die axiale Verschiebbarkeit des Bremshubringes und der damit verbundenen axialen Verschiebung der Bremshubring-Führungsstruktur ist erfindungswesentlich, um die zum Bremsen benötigte Bremskraft an das Bremssystem zu übertragen.

In einer Ausführungsform ist die Bremshubring-Führungsstruktur derart ausgestaltet, dass diese nicht radial rotierbar um die Lenkerachse ist. Dies kann beispielsweise dadurch erreicht werden, indem entlang der Lenkerachsen-Längsachse sowie der Längsachse der Bremshubring-Führungsstruktur Längsnuten und/oder Längsfedern angeordnet werden, wobei diese dazu eingerichtet sind, dass die Bremshubring-Führungsstruktur schienenartig entlang der Lenkerachse geführt wird.

In einer bevorzugten Ausgestaltung ist die Bremshubring-Führungsstruktur mit einem Entkoppler verbunden oder verbindbar, wobei der Entkoppler eine erste Entkopplerhälfte umfasst und eine zweite Entkopplerhälfte umfasst.

Unter einem Entkoppler (4.0) wird hierin ein Element verstanden, welches dazu eingerichtet ist, eine auf eine erste Seite des Entkopplers ausgeübte radiale Rotation nicht an eine der ersten Seite gegenüberliegende zweite Seite des Entkopplers zu übertragen, während eine axiale Verschiebung jedoch übertragen wird. Relevant ist hier, dass eine axiale Verschiebung in beide axiale Richtungen übertragen wird. Ein erfindungsgemäßer Entkoppler umfasst eine erste Entkopplerhälfte (4.1), welche die erste Seite darstellt und eine zweite Entkopplerhälfte (4.2), welche die zweite Seite darstellt. Dabei ist die erste Entkopplerhälfte proximal zum Lenkrad angeordnet, was bedeutet, dass diese näher am Lenkrad angeordnet ist als die zweite Entkopplerhälfte, die somit distal zum Lenkrad angeordnet ist. Dabei ist die Bremshubring-Führungsstruktur vorzugsweise mit der ersten Entkopplerhälfte (4.1) verbunden, sodass die Bremshubring-Führungsstruktur einen Abstand zwischen dem Bremshubring und dem Entkoppler (4.0) überwindet. Vorteilhaft kann die Bremshubring-Führungsstruktur (3.1) sehr kompakt, insbesondere nah an der Lenkerachse, ausgebildet sein. So kann die Lenkerstange im oberen Bereich vorteilhaft sehr dünnausgebildet sein. Eine kompakte Struktur schafft dabei auch Platz für weitere Elemente, wie beispielsweise ein Display.

Erfindungsgemäß hat die erste Entkopplerhälfte (4.1) somit gegenüber der zweiten Entkopplerhälfte (4.2) nur einen Freiheitsgrad, wobei dieser Freiheitsgrad die Rotation um die Lenkerachse ist. Es liegt also ein Formschluss derart vor, dass eine axiale Verschiebung der ersten Entkopplerhälfte um einen gewissen Weg in eine erste Richtung, parallel zur Lenkerachse, auch eine Verschiebung der zweiten Entkopplerhälfte um den gleichen Weg in dieser ersten Richtung zur Folge hat und dass eine axiale Verschiebung der ersten Entkopplerhälfte um einen gewissen Weg in eine zweite, der ersten Richtung entgegengesetzte Richtung auch eine Verschiebung der zweiten Entkopplerhälfte um den gleichen Weg in dieser zweiten Richtung zur Folge hat. Dadurch stützen sich die erste Entkopplerhälfte und die zweite Entkopplerhälfte vorteilhaft gegenseitig und die Vorrichtung kann somit auch ohne eine Stützstruktur sehr kompakt ausgebildet werden.

Nach einer vorteilhaften Ausführung ist die Bremsring-Führungsstruktur derart ausgebildet, dass sie wenigstens abschnittsweise parallel zur Lenkerachse verläuft, wobei die Bremsring-Führungsstruktur, welche vorzugsweise abschnittsweise als Hohlzylinder ausgebildet ist, also einen hohlzylinderförmigen Abschnitt aufweist, die Lenkerachse derart umschließt, dass eine Führung der Bremsring-Führungsstruktur erfolgt, welche vorteilhaft ein Verkanten oder eine Verkippen der Bremsring-Führungsstruktur gegenüber der Lenkerachse verhindert. In dem hohlzylinderförmigen Abschnitt der Bremsring-Führungsstruktur ist dabei die Lenkerachse angeordnet. Der Zwischenraum zwischen der Lenkerachse und dem hohlzylinderförmigen Abschnitt der Bremsring-Führungsstruktur ist dabei derart ausgestaltet, dass ein Gleiten der Bremsring-Führungsstruktur an der Lenkerachse sowohl radial als auch axial möglich ist, ein Verkippen jedoch verhindert wird. Die Symmetrieachse, welche innerhalb des hohlzylinderförmigen Abschnitts verläuft, bleibt dabei immer parallel zur Symmetrieachse der Lenkerachse. Vorzugsweise fallen die Symmetrieachse der Lenkerachse sowie die Symmetrieachse des hohlzylinderförmigen Abschnitts der Bremsring-Führungsstruktur zusammen.

Dabei kann ein Verkippen eines hohlzylinderförmigen Abschnitts einer Bremsring-Führungsstruktur beispielsweise dadurch verhindert werden, dass die Innenseite des hohlzylinderförmigen Abschnitts der Bremsring-Führungsstruktur einen geringen Abstand zur Außenseite der Lenkerachse in diesem Abschnitt hat, wobei der Innendurchmesser des hohlzylinderförmigen Abschnitts bevorzugt maximal 110 %, besonders bevorzugt maximal 105 %, ganz besonders bevorzugt maximal 102 %, vom Außendurchmesser der Lenkerachse beträgt. Alternativ können Abstandshalter zwischen dem hohlzylinderförmigen Abschnitt der Bremsring-Führungsstruktur und der Außenseite der Lenkerachse angeordnet sein. Dadurch kann auch ein größerer Abstand durch derartige Abstandshalter, insbesondere durch reibungsvermindernde Elemente, beispielweise durch reibungsvermindernde Lagerungselemente, wie hierin beschrieben, ausgeglichen werden. Ein Verkippen kann also auch dadurch verhindert werden, dass der entstehende Hohlraum zwischen der Innenseite des hohlzylinderförmigen Abschnitts der Bremsring-Führungsstruktur und der Außenseite der Lenkerachse durch Abstandshalter, insbesondere durch reibungsvermindernde Lagerungselemente gefüllt ist.

Im Sinne der Erfindung kann ein hohlzylinderförmiger Abschnitt auch Öffnungen aufweisen. Dabei ist relevant, dass der hohlzylinderförmige Abschnitt der Bremsring-Führungsstruktur die Lenkerachse wenigstens von zwei oder wenigstens drei Seiten begrenzt, sodass eine axiale Verschiebung und auch eine Rotation des hohlzylinderförmigen Abschnitts der Bremsring-Führungsstruktur auf der Lenkerachse möglich ist. Optional weist der hohlzylinderförmige Abschnitt jedoch keine Öffnungen auf.

In einer Ausgestaltung umfasst die erste Entkopplerhälfte ein ringförmiges Element, wobei die zweite Entkopplerhälfte ein ringförmiges Element mit einer umlaufenden Einbuchtung mit einem erhobenen Rand umfasst, in der die erste Entkopplerhälfte radial rotierbar gelagert ist. Durch den erhobenen Rand wird gewährleistet, dass eine durch die BremsringFührungsstruktur bewirkte axiale Verschiebung der ersten Entkopplerhälfte an die zweite Entkopllerhälfte übertragen wird, wodurch diese ebenfalls eine axiale Verschiebung ausführt, aber rotatorisch von der ersten Entkopplerhälfte entkoppelt ist.

In einer Ausführungsform sind die oben beschriebenen Stabelemente dazu eingerichtet, die Bremshubring-Führungsstruktur mit der ersten Entkopplerhälfte zu verbinden. Durch ein vom Fachmann frei wählbares Verbindungsmittel kann eine Verbindbarkeit eines Stabelements mit der ersten Entkopplerhälfte, oder der Bremshubring-Führungsstruktur mit der ersten Entkopplerhälfte erreicht werden. Dadurch ist vorteilhaft gegeben, dass die BremshubringFührungsstruktur schnell von dem Entkoppler abgetrennt werden kann, was insbesondere bei Wartungstätigkeiten vorteilhaft ist.

In einer bevorzugten Ausgestaltung ist die Bremshubring-Führungsstruktur mit der ersten Entkopplerhälfte axial formschlüssig und radial formschlüssig verbunden oder verbindbar, wobei die erste Entkopplerhälfte entlang der Lenkerachse axial verschiebbar und um die Lenkerachse radial rotierbar angeordnet ist. Dabei wird unter einem axialen Formschluss zweier Komponenten (z.B. der Bremshubring-Führungsstruktur und der ersten Entkopplerhälfte) verstanden, dass diese so miteinander verbunden sind, dass beide Komponenten gezwungenermaßen die gleiche axiale Verschiebung ausüben, wobei eine radiale Rotation der beiden Komponenten gegeneinander erlaubt sein kann. Unter einem radialen Formschluss zweier Komponenten (z.B. der Bremshubring-Führungsstruktur und der ersten Entkopplerhälfte) wird verstanden, dass diese so miteinander verbunden sind, dass beide Komponenten gezwungenermaßen die gleiche radiale Rotation ausüben.

Die Verbindung der Bremshubring-Führungsstruktur mit der ersten Entkopplerhälfte kann reversibel (verbindbar) eingerichtet sein. So kann eine reversible axiale und radiale formschlüssige Verbindung bspw. über ein Verschrauben der Bremshubring-Führungsstruktur mit der ersten Entkopplerhälfte erreicht werden. Vorteilhaft kann so eine Wartung und Reinigung der einzelnen Komponenten, insbesondere der Bremshubring-Führungsstruktur und der ersten Entkopplerhälfte sowie der zweiten Entkopplerhälfte, einfach realisiert werden. Wenn die Verbindung nicht reversibel sein soll, so kann die Bremshubring-Führungsstruktur mit der ersten Entkopplerhälfte verschweißt sein, oder das Material dieser beiden Komponenten kann die gleiche Kontinuität ausbilden und bspw. in einem Gussverfahren erzeugt werden.

Die erste Entkopplerhälfte ist mit der zweiten Entkopplerhälfte axial formschlüssig verbunden oder verbindbar. Hier ist anzumerken, dass eine Verbindung, sofern sie eine radiale Rotation der ersten Entkopplerhälfte gegen die zweite Entkopplerhälfte erlauben soll, natürlich nicht über eine stoffschlüssige Verbindung, sondern über eine formschlüssige Verbindung erreicht werden kann, wobei der axiale Formschluss in diesem Ausführungsbeispiel dadurch gegeben ist, dass der erhobene Rand des ringförmigen Elements der zweiten Entkopplerhälfte das ringförmige Element der ersten Entkopplerhälfte formschlüssig einschließt.

Die zweite Entkopplerhälfte kann derart ausgestaltet sein, dass sie aus zwei ringförmigen Elementen besteht, die über ein Gewinde reversibel miteinander verbindbar sind und jeweils einen umlaufenden erhobenen Rand aufweisen, und in verbundenem Zustand die umlaufende Einbuchtung ausbilden, in welcher das ringförmige Element der ersten Entkopplerhälfte radial rotierbar gelagert ist. Vorteilhaft kann dadurch erreicht werden, dass die beiden Entkopplerhälften einfach voneinander separiert werden können. Da eine radiale Rotation der ersten Entkopplerhälfte aufgrund der bestimmungsgemäßen radialen Entkopplung nicht an die zweite Entkopplerhälfte übertragen wird, wird das Gewinde der zweiten Entkopplerhälfte somit nicht aufgedreht.

Die zweite Entkopplerhälfte ist entlang der Lenkerachse axial verschiebbar und in Bezug auf den Fahrzeugrahmen radial statisch angeordnet ist, wobei die erste Entkopplerhälfte gegen die zweite Entkopplerhälfte radial rotierbar gelagert ist. Unter einer radial statischen Anordnung wird verstanden, dass die zweite Entkopplerhälfte keine radiale Rotation ausführt. Wie oben beschrieben, ist die erste Entkopplerhälfte radial rotierbar in der zweiten Entkopplerhälfte gelagert. Das heißt, dass die erste Entkopplerhälfte der radialen Rotation der Bremsring-Führungsstruktur folgt.

Bevorzugt ist die zweite Entkopplerhälfte mit zumindest einem Bremszugmittel (5.0) gekoppelt ist, wobei das Bremszugmittel zur Übertragung des Bremshubes an das Bremssystem eingerichtet ist. Bei einem Bremzugmittel kann es sich um einen Kabelzug oder Bowdenzug oder ein beliebiges anderes Mittel handeln, welches dazu geeignet ist, den Bremshub von der zweiten Entkopplerhälfte an das Bremssystem zu übertragen. Unter einer Kopplung wird hierin eine reversible Verbindung einer Komponente mit einer weiteren Komponente verstanden, die bevorzugt auf eine Zugbelastung ausgelegt ist. Dabei kann der Fachmann eine geeignete Verbindung (z.B. Klemmung, Verschrauben) wählen, um das Bremzugmittel mit der zweiten Entkopplerhälfte zu verbinden. Im einfachsten Fall ist das eine Ende des Bremzugmittels als eine Verdickung ausgestaltet, die in Ösen der zweiten Entkopplerhälfte eingelegt wird.

In einer Ausgestaltung ist die zweite Entkopplerhälfte mit zumindest einem Bremshebel (5.1) gekoppelt, wobei der Bremshebel mit dem Bremszugmittel gekoppelt ist. Bei einem erfindungsgemäßen Bremshebel kann es sich um einen Bremshebel handeln, wie er beispielsweise aus der US6443027B1 bekannt ist. Weitere ähnlich gestaltete Bremshebel sind dem Fachmann bekannt. Der Bremshebel kann über ein vom Fachmann wählbares Mittel mit dem Bremzugmittel oder der zweiten Entkopplerhälfte verbunden werden.

In einer Ausgestaltung kontaktiert der Bremshebel mit einem proximalen Bremshebelende eine umlaufende Kontaktfläche der Bremshubring-Führungsstruktur punktförmig, wobei das proximale Bremshebelende dazu eingerichtet ist, der axialen Verschiebung der Bremshubring-Führungsstruktur zu folgen.

Unter dem proximalen Bremshebelende (5.2) wird der Teil des Bremshebels verstanden, welcher die umlaufende Kontaktfläche der Bremshubring-Führungsstruktur kontaktiert, wobei eine punktförmige Kontaktierung dadurch gegeben ist, indem das proximales Bremshebelende bspw. kugelförmig ausgestaltet ist.

Bei der umlaufenden Kontaktfläche (3.2) der Bremshubring-Führungsstruktur handelt es sich um eine Fläche, die auf dem Außenumfang der Bremshubring-Führungsstruktur angeordnet ist.

Damit das proximale Bremshebelende einer axialen Verschiebung der BremshubringFührungsstruktur folgen kann, ist diese so ausgestaltet, dass die Seite der umlaufenden Kontaktfläche, die näher am Fahrzeugrahmen orientiert ist, bspw. als ein erhobener Rand ausgestaltet ist, so dass bei einer axialen Verschiebung der Bremshebel-Führungsstruktur der erhobene Rand gegen das proximale Bremshebelende drückt und dieser somit der axialen Verschiebung der Bremshebel-Führungsstruktur folgt.

In einer Ausgestaltung umfasst die umlaufende Kontaktfläche der BremshubringFührungsstruktur eine umlaufende Führungsnut (3.3), welche dazu eingerichtet ist, das proximale Bremshebelende führbar zu lagern. Bevorzugt ist die Breite der umlaufenden Führungsnut so gewählt, dass diese dem Durchmesser eines kugelförmigen proximalen Bremshebelendes entspricht. Die Tiefe der umlaufenden Führungsnut kann zumindest einem Zehntel, bevorzugt zumindest einem Fünftel und ganz besonders bevorzugt zumindest einem Drittel des Durchmessers eines proximalen Bremshebelendes entsprechen.

In einer bevorzugten Ausführungsform umfasst die Lenkerachse und/oder die Kontaktfläche der Bremshubring-Führungsstruktur und/oder die umlaufende Führungsnut und/oder eine Bremshubring-Führungsstruktur-Innenseite zumindest ein reibungsverringerndes Lagerungselement. Unter der Bremshubring-Führungsstruktur-Innenseite (3.4) wird die Fläche der Bremshubring-Führungsstruktur verstanden, welche der Lenkerachse zugewandt ist und diese kontaktiert, sofern kein reibungsverringerndes Lagerungselement angeordnet ist.

Unter einem reibungsverringernden Lagerungselement (6.0) wird ein Mittel verstanden, dass dazu eingerichtet ist, eine möglichst geringe Reibung zwischen zwei Komponenten (z.B. der Bremshubring-Führungsstruktur-Innenseite und der Lenkerachse) zu bewirken. Dabei kann das reibungsverringernde Mittel beispielsweise aus einem Kunststoff (z.B.

Polytetrafluorethylen), selbstschmierenden Kunststoff (z.B.

PolyetheretherketonPolyvinylether, PEEK-PVE), einem Fett oder Schmieröl gebildet sein.

Ein reibungsverringerndes Lagerungselement reduziert vorteilhaft den Verschleiß einander kontaktierender Komponenten. Weiterhin vorteilhaft wird ein störendes Quietschen verhindert.

In einer Ausgestaltung ist das reibungsverringernde Lagerungselement dazu eingerichtet, eine punktförmige Kontaktfläche zwischen der Bremshubring-Führungsstruktur-Innenseite und der Lenkerachse bereitzustellen. Eine punktförmige Kontaktfläche kann beispielsweise durch noppenartige Erhebungen in der Oberfläche der Lenkerachse oder in der Bremshubring-Führungsstruktur-Innenseite erreicht werden.

Vorteilhaft reduziert eine punktförmige Kontaktfläche die Reibung zwischen der Bremshubring-Führungsstruktur-Innenseite und der Lenkerachse und damit den Verschleiß.

In einer Ausführungsform ist das reibungsverringernde Lagerungselement aus zumindest drei Kugellagern (6.2) gebildet, wobei diese um den Umfang der Lenkerachse konzentrisch zur Lenkerachse in einem Winkel von 120° zueinander beabstandet sind. Eine solche Anordnung soll als Kugellagerpaar bezeichnet werden. Bevorzugt umfasst das reibungsverringernde Lagerungselement zumindest zwei Kugellagerpaare, die zueinander beabstandet entlang der Lenkerachse angeordnet sind. Die geeignete Position auf der Lenkerachse kann der Fachmann frei bestimmen.

In einer Ausführungsform umfasst das proximale Bremshebelende ein Kugellager, welches dazu eingerichtet ist, eine punktförmige Kontaktfläche zwischen dem proximalen Bremshebelende und der Kontaktfläche der Bremshubring-Führungsstruktur oder der umlaufenden Führungsnut bereitzustellen. Vorteilhaft kann dadurch die Reibung zwischen dem proximalen Bremshebelende und der Kontaktfläche der Bremshubring-Führungsstruktur reduziert werden.

In einer Ausgestaltung umfasst das erfindungsgemäße System ein Einrastmittel, welches dazu eingerichtet ist, den Bremshubring nach erfolgtem Bremshub an dem Lenker reversibel zu fixieren. Ein Einrastmittel (2.3) ist entweder am Bremshubring, oder am Lenkrad angeordnet und kann durch den Fahrer so bedient werden, dass der Bremshubring bei erfolgtem Bremshub, also wenn der Abstand zwischen Bremshubring und Lenkrad minimal ist, axial formschlüssig mit dem Lenkrad reversibel verbunden werden. Vorteilhaft kann dadurch eine Feststellbremse realisiert werden. Wenn der Fahrer das Fahrzeug wieder bewegen möchte, kann er das Einrastmittel wieder umlegen und den Bremshubring wieder von dem Lenkrad lösen.

In einer weiteren Ausführungsform ist das Einrastmittel so ausgestaltet, dass auch ein radialer Formschluss zwischen Bremshubring und Lenkrad gegeben ist. Weiterhin kann das Einrastmittel ein Schloss umfassen, so dass das Fahrzeug vorteilhaft gegen Diebstahl gesichert ist.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

Weitere Vorteile, Merkmale und Anwendungsmöglichkeiten der vorliegenden Erfindung ergeben sich auch aus der nachfolgenden Beschreibung von Ausführungsbeispielen und den Zeichnungen. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Zudem ist darauf hinzuweisen, dass der Fachmann zweifelsohne erkennt, dass sich die einzelnen Merkmale, die in den vorstehenden konkreten Ausführungsformen beschrieben sind, auf angemessene Weise miteinander kombinieren lassen, soweit kein Widerspruch vorliegt, wobei zum Vermeiden unnötiger Wiederholung auf eine separate Beschreibung verschiedener möglicher Kombinationen verzichtet wird.

Darüber hinaus umfasst die Erfindung zudem die Verwendung eines Bremshubringsystems (wie hierin definiert) in einem Fahrzeug, insbesondere in einem mehrspurige Fahrrad zur Übertragung eines durch einen Fahrer bewirkten Bremshubes.

Zur Erläuterung des Grundprinzips des erfindungsgemäßen Systems werden nachfolgend Ausführungsbeispiele dargestellt, ohne die Erfindung auf diese zu beschränken. Anzumerken ist, dass das Verhältnis oder die Abmessungen der erfindungsgemäßen Bauteile zu Gunsten der Darstellung nicht der Realität entsprechen.

Dabei zeigt
- **Fig. 1A:**: eine schematische Darstellung einer Ausführungsform des Bremshubringsystems (1.0) in nicht betätigtem Zustand.
- **Fig. 1B:**: eine schematische Darstellung einer Ausführungsform des Bremshubringsystems (1.0) in betätigtem Zustand.
- **Fig. 2A:**: eine vereinfachte Darstellung eines Entkopplers (4.0) in einem Längsquerschnitt zur Lenkerachse (2.2).
- **Fig. 2B:**: eine vereinfachte Darstellung eines Entkopplers (4.0) in einem Querschnitt zur Lenkerachse (2.2) in der Schnittebene A-A aus Fig. 2A.
- **Fig. 3A:**: eine schematische Darstellung einer Ausführungsform des Bremshubringsystems (1.0) ohne Entkoppler in nicht betätigtem Zustand.
- **Fig. 3B:**: eine schematische Darstellung einer Ausführungsform des Bremshubringsystems (1.0) ohne Entkoppler in betätigtem Zustand.
- **Fig. 4A:**: eine umlaufende Kontaktfläche (3.2) mit der umlaufenden Führungsnut (3.3) und einem in der Führungsnut (3.3) gelagerten Bremshebel (5.1) in einem Längsquerschnitt zur Lenkerachse (2.2).
- **Fig. 4B:**: eine umlaufende Kontaktfläche (3.2) mit der umlaufenden Führungsnut (3.3) und einem in der Führungsnut (3.3) gelagerten Bremshebel (5.1) in einer Schrägansicht
- **Fig. 5A:**: eine Anordnung eines reibungsverringernden Lagerungselements (6.0) zwischen Bremshubring-Führungsstruktur-Innenseite (3.4) und der Lenkerachse (2.2).
- **Fig. 5B+C:**: eine Anordnung eines reibungsverringernden Lagerungselements (6.0) aus Kugellagern (6.2) zwischen Bremshubring-Führungsstruktur-Innenseite (3.4) und der Lenkerachse (2.2).
- **Fig. 6A:**: Bremshubringsystems (1.0) in nicht betätigtem Zustand mit nicht betätigtem Einrastmittel (2.3).
- **Fig. 6B:**: Bremshubringsystems (1.0) in betätigtem Zustand mit betätigtem Einrastmittel (2.3).

In den unterschiedlichen Figuren sind hinsichtlich ihrer Funktion gleichwertige Teile stets mit denselben Bezugszeichen versehen, sodass diese in der Regel auch nur einmal beschrieben werden.

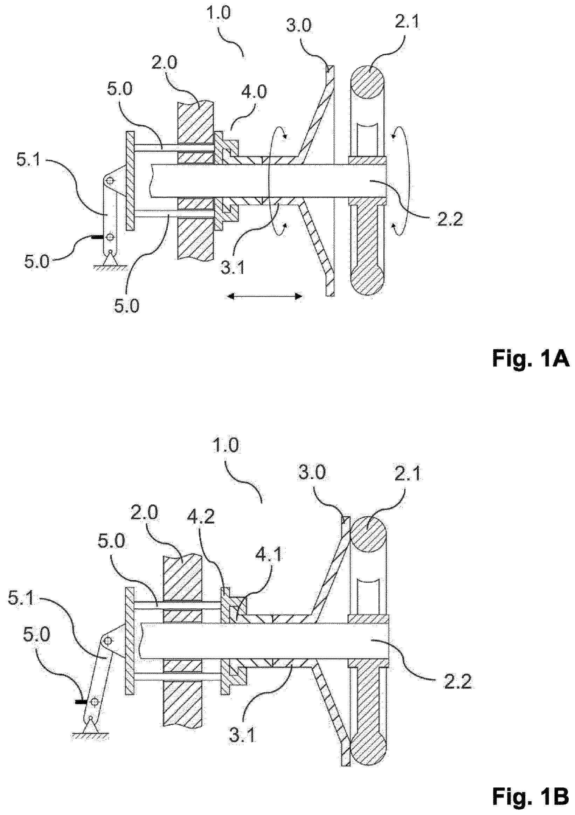

Die **Fig. 1** zeigt eine schematische Darstellung einer Ausführungsform des Bremshubringsystems **(1.0)** in nicht betätigtem Zustand (Fig. 1A) und im betätigten Zustand mit erfolgtem Bremshub (Fig. 1B). Der Fahrer, der das Fahrzeug über das Lenkrad **(2.1)** steuert, zieht an dem Bremshubring **(3.0),** um einen Bremshub auszulösen. Der Bremshubrig **(3.0)** ist radial um die Lenkerachse **(2.2)** im Uhrzeigersinn und gegen den Uhrzeigersinn rotierbar (angedeutet durch die Rotationspfeile). Der Bremshubring **(3.0)** ist mit einer Bremshubring-Führungsstruktur **(3.1)** verbunden, wobei diese Verbindung durch ein nicht dargestelltes Mittel reversibel ist. Dabei ist diese Verbindung so ausgestaltet, dass die

Bewegung der Bremshubring-Führungsstruktur **(3.1)** der Bewegung des Bremshubringes **(3.0)** folgt. Die Bremshubring-Führungsstruktur (3.1) ist dabei wenigstens abschnittsweise hohlzylinderförmig ausgebildet, wobei die Bremshubring-Führungsstruktur (3.1) die Lenkerachse (2.2) umschließt. Der hohlzylinderförmige Abschnitt der Bremshubring-Führungsstruktur (3.1) ist dabei der parallel zur Lenkerachse (2.2) verlaufende Abschnitt der Bremshubring-Führungsstruktur (3.1). In diesem Ausführungsbeispiel liegt die Innenseite des hohlzylinderförmigen Abschnittes der Bremsring-Führungsstruktur **(3.1)** an der Außenseite der Lenkerachse (2.2) an. Beide Komponenten sind axial entlang der Lenkerachse **(2.2)** verschiebbar (durch den Doppelpfeil angedeutet) und um die Lenkerachse **(2.2)** radial rotierbar. Die Bremsring-Führungsstruktur **(3.1)** ist mit einem Entkoppler **(4.0)** verbunden. Dieser weist eine erste Entkopplerhälfte **(4.1)** und eine zweite Entkopplerhälfte **(4.2)** auf, wobei die erste Entkopplerhälfte **(4.1)** proximal zum Lenkrad **(2.1)** orientiert ist und die zweite Entkopplerhälfte **(4.2)** distal zum Lenkrad **(2.1)** orientiert ist. Aus Gründen einer einfachen Darstellung ist das Zusammenwirken der ersten Entkopplerhälfte **(4.1)** und der zweiten Entkopplerhälfte **(4.2)** in dieser Figur stark vereinfacht dargestellt, jedoch ist der Entkoppler **(4.0)** derart eingerichtet, dass er eine radiale Rotation des ersten Entkopplerhälfte **(4.1)** erlaubt, wobei die radiale Rotation durch den Entkoppler **(4.0)** entkoppelt wird. Die zweite Entkopplerhälfte **(4.2)** ist radial statisch angeordnet, jedoch wird eine axiale Verschiebung der ersten Entkopplerhälfte **(4.1)** an die zweite Entkopplerhälfte **(4.2)** übertragen. Ein durch einen Fahrer bewirkter Bremshub wird an den Bremshebel **(5.1)** übertragen, der mit der zweiten Entkopplerhälfte **(4.2)** über ein Bremszugmittel **(5.0),** hier ein Bowdenzug, verbunden ist. Der Bremshebel **(5.1)** ist weiterhin über ein Bremszugmittel **(5.0)** mit einem nicht dargestellten Bremsssystem des Fahrzeuges verbunden. Der Bremshebel **(5.1)** ermöglicht vorteilhaft eine einstellbare Kraftumsetzung, so dass die Kraftübertragung des Bremshubes an das Bremssystem einstellbar ist. Statt eines Bremshebels **(5.1)** kann das Bremszugmittel **(5.0)** ausgehend von der zweiten Entkopplerhälfte **(4.2)** auch direkt mit dem Bremssystem des Fahrzeugs verbunden sein, um dieses zu betätigen.

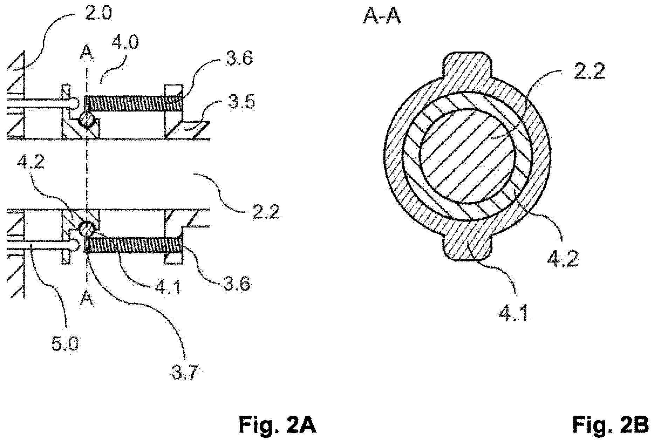

Die **Fig. 2A** zeigt eine Darstellung einer Ausführungsform eines Entkopplers **(4.0)** aus einem Metall (z.B. Aluminium, Stahl). Dieser umfasst eine erste Entkopplerhälfte **(4.1),** die drehbar in der zweiten Entkopplerhälfte **(4.2)** gelagert ist. Dabei kann die zweite Entkopplerhälfte **(4.2)** als ein weiblicher Ring verstanden werden, in dem die erste Entkopplerhälfte **(4.1)** um die Lenkerachse **(2.2)** drehbar gelagert ist. Die Darstellung zeigt auch, wie ein Bremszugmittel **(5.0),** z.B. ein Bowdenzug, mit der zweiten Entkopplerhälfte **(4.2)** gekoppelt ist. Die Bremshubring-Führungsstruktur **(3.1),** hier nicht dargestellt, ist reversibel mit einem Ringelement **(3.5)** verbunden. Das Ringelement **(3.5)** weist Gewindebohrungen zur Aufnahme eines Stabelements **(3.6)** auf. Die Stabelemente **(3.6)** sind über ein Verbindungsmittel **(3.7)** reversibel mit der ersten Entkopplerhälfte **(4.1)** verbunden. Bei Bedarf erlaubt das Verbindungsmittel **(3.7)** eine Abtrennung der Stabelemente **(3.6)** und somit eine Entkopplung der Bremshubring-Führungsstruktur **(3.1)** von dem Entkoppler **(4.0).** Somit ist vorteilhaft erreicht, dass die Bremshubring-Führungsstruktur **(3.1)** einfach von dem Entkoppler **(4.0)** entfernt werden kann, was bspw. bei Wartungsarbeiten notwendig ist.

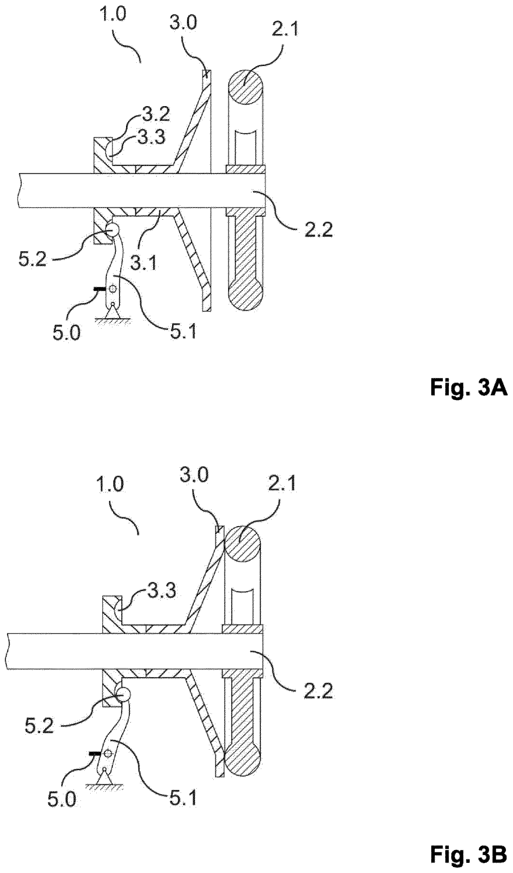

Die **Fig. 2B** zeigt eine Querschnittsdarstellung durch den Entkoppler **(4.0)** entlang der Schnittebene A-A aus Fig. 2A. In diesem Ausführungsbeispiel ist die zweite Entkopplerhälfte **(4.2)** aus einem reibungsarmen, gleitfähigen Kunststoff gefertigt, oder zumindest mit diesem beschichtet. Damit wird vorteilhaft erreicht, dass die zweite Entkopplerhälfte **(4.2)** einerseits reibungsarm auf der Lenkerachse **(2.2)** gelagert ist und andererseits die erste Entkopllerhälfte **(4.1)** reibungsarm in der zweiten Entkopplerhälfte **(4.2)** gelagert ist. Die **Fig. 3A** und **3B** zeigt eine schematische Darstellung einer Ausführungsform des Bremshubringsystems **(1.0)** in nicht betätigtem Zustand (Fig. 3A) und im betätigten Zustand mit erfolgtem Bremshub (Fig. 3B). In dieser Ausführungsform des Bremshubringsystem **(1.0)** wird auf einen Entkoppler **(4.0)** verzichtet. Stattdessen ist die Bremshubring-Führungsstruktur **(1.0)** so ausgestaltet, dass sie eine umlaufende Kontaktfläche **(3.2)** umfasst. Die umlaufende Kontaktfläche weist eine Führungsnut **(3.3)** auf, in welcher zumindest ein Bremshebel **(5.1),** insbesondere dessen proximales Bremshebelende **(5.2),** führbar gelagert ist, indem er die Führungsnut **(3.3)** punktförmig kontaktiert. Somit kann vorteilhaft auf einen Entkoppler **(4.0)** verzichtet werden, wodurch das System weniger Komponenten aufweist, die gewartet werden müssen. Bevorzugt ist die Führungsnut **(3.3)** mit einem nicht dargestellten reibungsverringernden Lagerungselement, hier einem gleitfähigen Kunststoff (z.B. Polytetrafluorethylen), beschichtet, um das proximale Bremshebelende reibungsärmer zu führen und somit vorteilhaft dessen Verschleiß zu verringern.

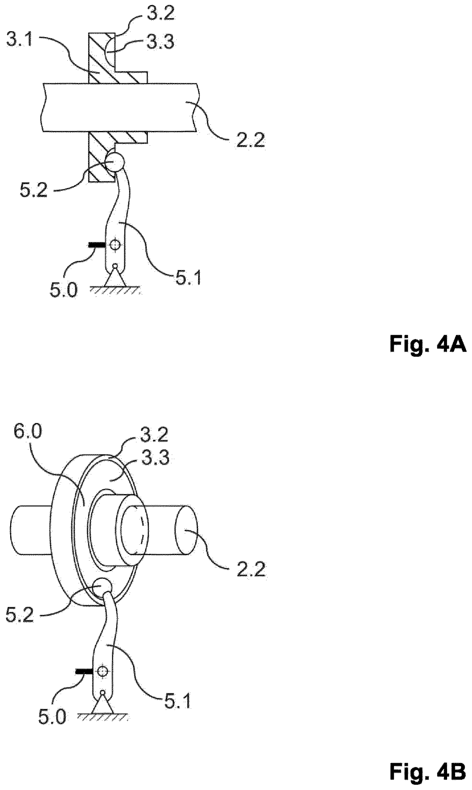

Die **Fig. 4A** und **4B** zeigt eine umlaufende Kontaktfläche **(3.2)** mit der umlaufenden Führungsnut **(3.3)** und einem in der Führungsnut **(3.3)** gelagerten Bremshebel **(5.1)** in einem Längsquerschnitt zur Lenkerachse **(2.2)** (Fig. 4A) und in einer Schrägansicht (Fig. 4B). Die umlaufende Führungsnut **(3.3)** ist mit einem reibungsverringernden Lagerungselement **(6.0)** beschichtet.

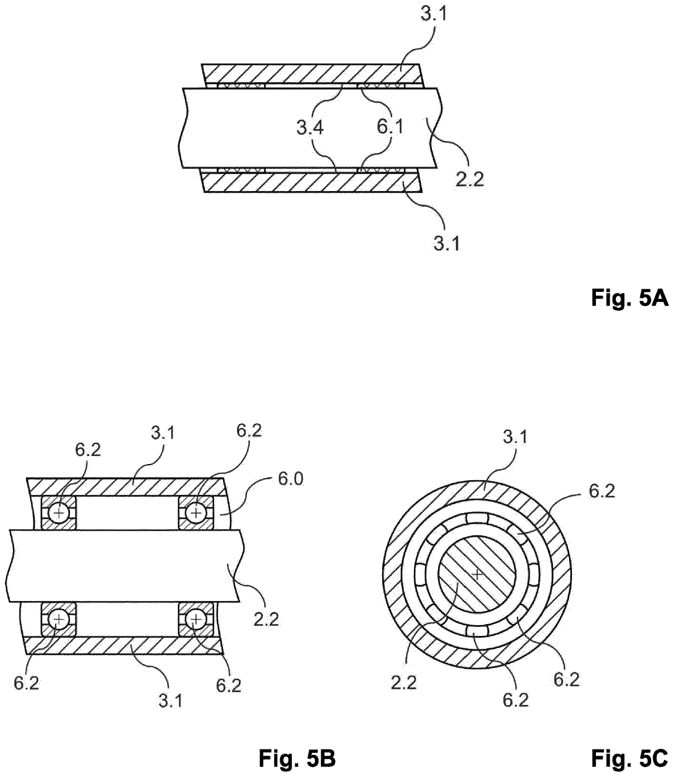

Die **Fig. 5A** zeigt eine Ausführungsform, bei der zwischen der Bremshubring-Führungsstruktur-Innenseite **(3.4)** und der Lenkerachse **(2.2)** ein reibungsverringerndes Lagerungselement **(6.0),** hier bestehend aus Ringen aus einem gleitfähigen Kunststoff **(6.1)** (z.B. PEEK-PVE), angeordnet ist. Es ist somit zwischen der Innenseite des hohlzylinderförmigen Abschnitts des Brems-Führungselementes und der Außenseite der Lenkerachse (2.2) ein reibungsverringerndes Lagerungselement (6.0) aus Ringen aus einem gleitfähigen Kunststoff (6.1) angeordnet. Vorteilhaft an der Verwendung eines gleitfähigen Kunststoffes ist, dass die Bremshubring-Führungsstruktur **(3.1),** bzw. der mit dieser verbundene Bremshubring **(3.0)** einerseits reibungs- und verschleißarm gelagert ist, aber die Lagerung andererseits nicht zu leichtgängig ist, so dass der Bremshubring **(3.0)** nicht um die Lenkerachse **(2.2)** ohne Zutun des Fahrers frei dreht. Die Verwendung von Ringen ermöglicht vorteilhaft eine geringere Kontaktfläche als ein flächiges reibungsverringerndes Lagerungselement **(6.0).** Die **Fig. 5B** und **5C** zeigt eine abgewandelte Ausführungsform, wobei das reibungsverringernde Lagerungselement **(6.0)** aus mehr als einem Kugellager **(6.2)** gebildet ist, welche konzentrisch um die Lenkerachse **(2.2)** angeordnet sind. Die Fig. 5B zeigt die Anordnung in einem Längsquerschnitt zur Lenkerachse **(2.2).** Die Fig. 5B zeigt die Anordnung in einem Querschnitt zur Lenkerachse **(2.2).**

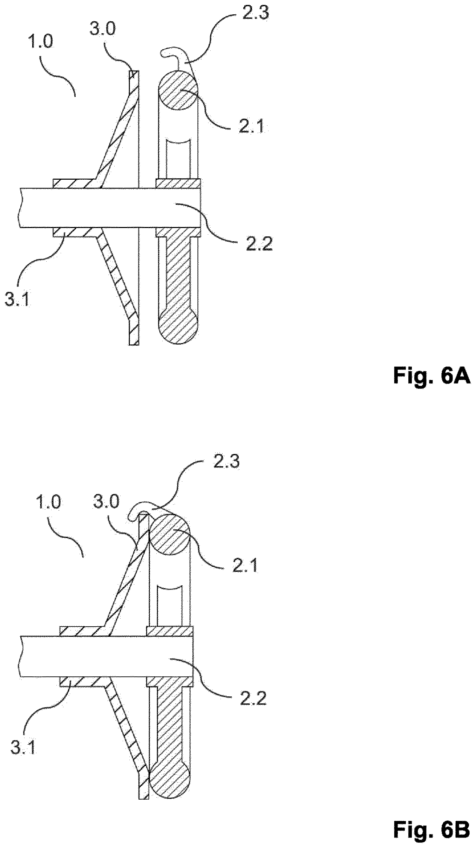

Die **Fig. 6** zeigt eine Ausführungsform des Bremshubringsystems **(1.0)** in nicht betätigtem Zustand (Fig. 6A) und im betätigten Zustand mit erfolgtem Bremshub (Fig. 6B). Wenn der Bremshub erfolgt ist, kann vom Fahrer ein Einrastmittel **(2.3)** betätigt werden, um den Bremshubring **(3.0)** an dem Lenkrad **(2.1)** reversibel zu fixieren. Vorteilhaft kann somit auf sehr einfache Weise die Funktion einer Feststellbremse ermöglicht werden. Die gezeigten Ausführungsformen der Erfindung sind jeweils beispielhaft und nicht beschränkend zu verstehen. Die Erfindung kann auch auf hiervon abweichende Weise ausgeführt werden. So kann beispielsweise auch der Bremshubring **(3.0)** innerhalb des Lenkrades **(2.2)** angeordnet sein. Dadurch ergibt sich vorteilhaft, dass der Bremshubring **(3.0)** sehr kompakt aufgebaut ist und zudem nicht mehr sichtbar wahrgenommen wird.

Weiterhin ergibt sich dadurch vorteilhaft, dass der Fahrer mit den Fingern nicht so weit greifen muss, um den Bremshubring zu betätigen. Dies ist insbesondere für Fahrer mit kleineren Händen vorteilhaft.

Die vorstehenden Ausführungen sind nur einige bevorzugte und realisierbare Ausführungsformen der vorliegenden Erfindung. Daher sind alle gleichwertigen strukturellen Änderungen, die durch Anwendung der Beschreibung der Erfindung vorgenommen werden, in den Umfang der Patentanmeldung einzubeziehen.

Obwohl die Erfindung unter Bezugnahme auf bestimmte Ausführungsbeispiele beschrieben und illustriert wurde, soll die Erfindung nicht auf diese Ausführungsbeispiele beschränkt werden. Der Fachmann erkennt, dass Variationen und Modifikationen vorgenommen werden können, ohne dass der wahre Umfang der Erfindung, wie er durch die Ansprüche und Beschreibung definiert ist, verlassen wird. Es ist daher beabsichtigt, im Rahmen der Erfindung alle Variationen und Modifikationen, die in den Anwendungsbereich der beigefügten Ansprüche und deren Äquivalente fallen, einzuschließen.

### BEZUGSZEICHENLISTE

- 1.0: Bremshubringsystem
- 2.0: Fahrzeugrahmen
- 2.1: Lenkrad
- 2.2: Lenkerachse
- 2.3: Einrastmittel
- 3.0: Bremshubring
- 3.1: Bremshubring-Führungsstruktur
- 3.2: umlaufende Kontaktfläche
- 3.3: umlaufende Führungsnut
- 3.4: Bremshubring-Führungsstruktur-Innenseite
- 3.5: Ringelement
- 3.6: Stabelement
- 3.7: Verbindungsmittel
- 4.0: Entkoppler
- 4.1: erste Entkopplerhälfte
- 4.2: zweite Entkopplerhälfte
- 5.0: Bremszugmittel
- 5.1: Bremshebel
- 5.2: proximales Bremshebelende
- 6.0: reibungsverringerndes Lagerungselement
- 6.1: gleitfähiger Kunststoff
- 6.2: Kugellager

## Patentansprüche

1. **Bremshubringsystem (1.0)** zur Übertragung eines durch einen Fahrer bewirkten Bremshubes an ein Bremssystem eines Fahrzeugs, wobei das Fahrzeug einen Fahrzeugrahmen **(2.0)** umfasst und
das Bremshubringsystem einen Bremshubring **(3.0)** umfasst, der dazu eingerichtet ist, durch einen Fahrer des Fahrzeugs in Richtung eines Lenkrades **(2.1)** gezogen zu werden, wobei der Bremshubring **(3.0)** um eine Lenkerachse **(2.2)** angeordnet ist,
wobei der Bremshubring **(3.0)** mit einer Bremshubring-Führungsstruktur **(3.1)** verbunden oder verbindbar ist, wobei die Bremshubring-Führungsstruktur **(3.1)** entlang der Lenkerachse **(2.2)** axial verschiebbar und um die Lenkerachse **(2.2)** radial rotierbar angeordnet ist, wobei die Bremshubring-Führungsstruktur **(3.1)** mit einem Entkoppler **(4.0)** verbunden oder verbindbar ist, wobei der Entkoppler eine erste Entkopplerhälfte **(4.1),** die proximal zum Lenkrad **(2.1)** orientiert ist und eine zweite Entkopplerhälfte **(4.2),** die distal zum Lenkrad **(2.1)** orientiert ist, umfasst,
**dadurch gekennzeichnet, dass** der Entkoppler (4.0) eingerichtet ist, eine auf die erste Entkopplerhälfte (4.1) ausgeübte radiale Rotation nicht an die zweite Entkopplerhälfte (4.2) zu übertragen, während eine axiale Verschiebung jedoch übertragen wird.

2. Bremshubringsystem gemäß Anspruch 1, wobei die Bremshubring-Führungsstruktur (3.1) mit der ersten Entkopplerhälfte (4.1) verbunden ist.

3. Bremshubringsystem gemäß Anspruch 1 oder 2, wobei die Bremshubring-Führungsstruktur **(3.1)** einen hohlzylinderförmigen Abschnitt aufweist, welcher die Lenkerachse derart umschließt, dass eine Führung der Bremsring-Führungsstruktur (3.1) erfolgt, welche ein Verkanten der Bremsringführungsstruktur verhindert.

4. Bremshubringsystem gemäß Anspruch 3, wobei der Innendurchmesser des hohlzylinderförmigen Abschnitts maximal 110 % des Außendurchmessers der Lenkerachse (2.2) beträgt.

5. Bremshubringsystem gemäß einem der Ansprüche 1 bis 4, wobei die Bremshubring-Führungsstruktur **(3.1)** mit der ersten Entkopplerhälfte **(4.1)** axial formschlüssig und radial formschlüssig verbunden oder verbindbar ist, wobei die erste Entkopplerhälfte **(4.1)** entlang der Lenkerachse **(2.2)** axial verschiebbar und/oder um die Lenkerachse **(2.2)** radial rotierbar angeordnet ist.

6. Bremshubringsystem gemäß einem der Ansprüche 1 bis 5, wobei die erste Entkopplerhälfte **(4.1)** mit der zweiten Entkopplerhälfte **(4.2)** axial formschlüssig verbunden oder verbindbar ist.

7. Bremshubringsystem gemäß einem der Ansprüche 1 bis 6, wobei die zweite Entkopplerhälfte **(4.2)** entlang der Lenkerachse **(2.2)** axial verschiebbar und in Bezug auf den Fahrzeugrahmen **(2.0)** radial statisch angeordnet ist, wobei die erste Entkopplerhälfte **(4.1)** gegen die zweite Entkopplerhälfte **(4.2)** radial rotierbar gelagert ist.

8. Bremshubringsystem gemäß Anspruch 5 oder 7, wobei die zweite Entkopplerhälfte **(4.2)** mit zumindest einem Bremszugmittel **(5.0)** gekoppelt ist, wobei das Bremszugmittel **(5.0)** zur Übertragung des Bremshubes an das Bremssystem eingerichtet ist.

9. Bremshubringsystem gemäß Anspruch 7 oder 8, wobei die zweite Entkopplerhälfte **(4.2)** mit zumindest einem Bremshebel **(5.1)** gekoppelt ist, wobei der Bremshebel **(5.1)** mit dem Bremszugmittel **(5.0)** gekoppelt ist.

10. Bremshubringsystem gemäß einem der Ansprüche 1 bis 9, wobei der Bremshebel **(5.1)** mit einem proximalen Bremshebelende **(5.2)** eine umlaufende Kontaktfläche **(3.2)** der Bremshubring-Führungsstruktur **(3.1)** punktförmig kontaktiert, wobei das proximale Bremshebelende **(5.2)** dazu eingerichtet ist, der axialen Verschiebung der Bremshubring-Führungsstruktur **(3.1)** zu folgen.

11. Bremshubringsystem gemäß Anspruch 10, wobei die umlaufende Kontaktfläche **(3.2)** der Bremshubring-Führungsstruktur **(3.1)** eine umlaufende Führungsnut **(3.3)** aufweist, wobei die umlaufende Führungsnut **(3.3)** dazu eingerichtet ist, das proximale Bremshebelende **(5.2)** führbar zu lagern.

12. Bremshubringsystem gemäß einem der Ansprüche 1 bis 11, wobei die Lenkerachse **(2.2)** und/oder die umlaufende Kontaktfläche **(3.2)** der Bremshubring-Führungsstruktur **(3.1)** und/oder die umlaufende Führungsnut **(3.3)** und/oder eine BremshubringFührungsstruktur-Innenseite **(3.4)** zumindest ein reibungsverringerndes Lagerungselement (6.0) umfasst.

13. Bremshubringsystem gemäß Anspruch 12, wobei das reibungsverringernde Lagerungselement **(6.0)** aus einem gleitfähigen Kunststoff **(6.1)** gebildet ist.

14. Bremshubringsystem gemäß Anspruch 12 oder 13, wobei das reibungsverringernde Lagerungselement **(6.0)** dazu eingerichtet ist, eine punktförmige Kontaktfläche zwischen der Bremshubring-Führungsstruktur-Innenseite **(3.4)** und der Lenkerachse **(2.2)** bereitzustellen.

15. Bremshubringsystem gemäß Anspruch 14, wobei das reibungsverringernde Lagerungselement **(6.0)** aus zumindest drei Kugellagern **(6.2)** gebildet ist, welche konzentrisch um die Lenkerachse **(2.2)** angeordnet sind.

16. Bremshubringsystem gemäß einem der Ansprüche 10 bis 15, wobei das proximale
Bremshebelende **(5.2)** ein Kugellager **(6.2)** umfasst, welches dazu eingerichtet ist, eine punktförmige Kontaktfläche zwischen dem proximalen Bremshebelende **(5.2)** und der Kontaktfläche **(3.2)** der Bremshubring-Führungsstruktur **(3.1)** oder der Führungsnut **(3.3)** bereitzustellen.

17. Bremshubringsystem gemäß einem der Ansprüche 1 bis 16, wobei das Bremshubringsystem zumindest ein Einrastmittel **(2.3)** umfasst, welches dazu eingerichtet ist, den Bremshubring **(3.0)** nach erfolgtem Bremshub an dem Lenker **(2.1)** reversibel zu fixieren.

18. **Verwendung eines Bremshubringsystems (1.0)** nach einem der Ansprüche 1 bis 17 in einem Fahrzeug zur Übertragung eines durch einen Fahrer bewirkten Bremshubes.

## Claims

1. A **brake lift ring system (1.0)** for transmitting a brake lift effected by a driver to a brake system of a vehicle, the vehicle comprising a vehicle frame **(2.0),** and
the brake lift ring system comprises a brake lift ring **(3.0)** which is arranged to be pulled in the direction of a steering wheel **(2.1)** by a driver of the vehicle, the brake lift ring **(3.0)** being arranged about a handlebar axis **(2.2),**
wherein the brake lift ring **(3.0)** is connected or connectable to a brake lift ring guide structure **(3.1),** wherein the brake lift ring guide structure **(3.1)** is axially displaceable along the handlebar axis **(2.2)** and radially rotatable about the handlebar axis **(2.2),** wherein the brake lift ring guide structure **(3.1)** is connected or connectable to a decoupler **(4.0),** the decoupler comprising a first decoupler half **(4.1)** which is oriented proximally to the steering wheel **(2.1)** and a second decoupler half **(4.2)** which is oriented distally to the steering wheel **(2.1),**
**characterized in that**
the decoupler **(4.0)** is configured so that a radial rotation exerted on the first decoupler half **(4.1)** is not transmitted to the second decoupler half **(4.2),** while an axial shift is transmitted.

2. The brake lift ring system according to claim 1, wherein the brake lift ring guide structure **(3.1)** is connected to the first decoupler half **(4.1).**

3. The brake lift ring system according to claim 1 or 2, wherein the brake lift ring guide structure **(3.1)** has a hollow cylindrical section which encloses the handlebar axis in such a way that the brake lift ring guide structure **(3.1)** is guided in such a way that jamming of the brake lift ring guide structure is prevented.

4. The brake lift ring system according to claim 3, wherein the inner diameter of the hollow cylindrical section is at most 110% of the outer diameter of the handlebar axis **(2.2).**

5. The brake lift ring system according to one of claims 1 to 4, wherein the brake lift ring guide structure **(3.1)** is connected or connectable to the first decoupler half **(4.1)** axially form-fitting and radially form-fitting, wherein the first decoupler half **(4.1)** is arranged axially displaceable along the handlebar axis **(2.2)** and/or radially rotatable about the handlebar axis **(2.2).**

6. The brake lift ring system according to one of claims 1 to 5, wherein the first decoupler half **(4.1)** is axially form-fittingly connected or connectable to the second decoupler half **(4.2).**

7. The brake lift ring system according to one of claims 1 to 6, wherein the second decoupler half **(4.2)** is axially displaceable along the handlebar axis **(2.2)** and is arranged radially statically with respect to the vehicle frame (2.0), wherein the first decoupler half **(4.1)** is mounted radially rotatable against the second decoupler half **(4.2).**

8. The brake lift ring system according to claim 5 or 7, wherein the second decoupler half **(4.2)** is coupled to at least one brake cable means **(5.0),** wherein the brake cable means **(5.0)** is arranged to transmit the brake lift to the brake system.

9. The brake lift ring system according to claim 7 or 8, wherein the second decoupler half **(4.2)** is coupled to at least one brake lever **(5.1),** wherein the brake lever **(5.1)** is coupled to the brake cable means **(5.0).**

10. The brake lift ring system according to any one of claims 1 to 9, wherein the brake lever **(5.1)** makes punctiform contact with a proximal brake lever end **(5.2)** with a circumferential contact surface **(3.2)** of the brake lift ring guide structure **(3.1),** wherein the proximal brake lever end **(5.2)** is arranged to follow the axial shift of the brake lift ring guide structure **(3.1).**

11. The brake lift ring system according to claim 10, wherein the circumferential contact surface **(3.2)** of the brake lift ring guide structure **(3.1)** has a circumferential guide groove **(3.3),** wherein the circumferential guide groove **(3.3)** is adapted to guidably support the proximal brake lever end **(5.2).**

12. The brake lift ring system according to any one of claims 1 to 11, wherein the handlebar axis **(2.2)** and/or the circumferential contact surface **(3.2)** of the brake lift ring guide structure **(3.1)** and/or the circumferential guide groove **(3.3)** and/or a brake lift ring guide structure inner side **(3.4)** comprises at least one friction-reducing bearing member **(6.0).**

13. The brake lift ring system according to claim 12, wherein the friction-reducing bearing member **(6.0)** is formed from a slidable plastic **(6.1).**

14. The brake lift ring system according to claim 12 or 13, wherein the friction-reducing bearing member **(6.0)** is adapted to provide a punctiform contact surface between the brake lift ring guide structure inner side **(3.4)** and the handlebar axis **(2.2).**

15. The brake lift ring system according to claim 14, wherein the friction-reducing bearing member **(6.0)** is formed of at least three ball bearings **(6.2)** which are arranged concentrically around the handlebar axis **(2.2).**

16. The brake lift ring system according to any one of claims 10 to 15, wherein the proximal brake lever end **(5.2)** comprises a ball bearing **(6.2)** which is arranged to provide a punctiform contact surface between the proximal brake lever end **(5.2)** and the contact surface **(3.2)** of the brake lift ring guide structure **(3.1)** or the guide groove **(3.3).**

17. The brake lift ring system according to any one of claims 1 to 16, wherein the brake lift ring system comprises at least one latching means **(2.3)** which is adapted to reversibly fix the brake lift ring **(3.0)** to the link **(2.1)** after the brake lift has been performed.

18. **Use of a brake lift ring system (1.0)** according to any one of claims 1 to 17 in a vehicle for transmitting a brake lift effected by a driver.

## Revendications

1. Système (1.0) d'anneau de frein à lever destiné à transmettre une course de freinage exercée par un conducteur à un système de freinage d'un véhicule, le véhicule comprenant un châssis de véhicule (2.0) et
le système d'anneau de frein à lever comprend un anneau de frein (3.0) à lever adapté pour être tiré vers un volant (2.1) par un conducteur du véhicule, l'anneau de frein (3.0) à lever étant agencé autour d'un axe de volant (2.2),
l'anneau de frein (3.0) à lever étant relié ou apte à être relié à une structure (3.1) de guidage d'anneau de frein à lever, la structure (3.1) de guidage d'anneau de frein à lever étant agencée de manière à être apte à être déplacée axialement le long de l'axe de volant (2.2) et à être apte à tourner radialement autour de l'axe de volant (2.2), la structure (3.1) de guidage d'anneau de frein à lever étant reliée ou est apte à être reliée à un découpleur (4.0), le découpleur comprenant une première moitié (4.1) de découpleur qui est orientée de manière proximale par rapport au volant (2.1) et une deuxième moitié (4.2) de découpleur qui est orientée de manière distale par rapport au volant (2.1), **caractérisé en ce que** le découpleur (4.0) est agencé de façon à ne pas transmettre une rotation radiale exercée sur la première moitié (4.1) de découpleur à la deuxième moitié (4.2) de découpleur, tandis qu'un déplacement axial est cependant transmis.

2. Système d'anneau de frein à lever selon la revendication 1, dans lequel la structure (3.1) de guidage d'anneau de frein à lever est reliée à la première moitié (4.1) de découpleur.

3. Système d'anneau de frein à lever selon la revendication 1 ou la revendication 2, dans lequel la structure (3.1) de guidage d'anneau de frein à lever présente une portion cylindrique creuse qui entoure l'axe de volant de manière à réaliser un guidage de la structure (3.1) de guidage d'anneau de frein à lever qui empêche un basculement de la structure de guidage d'anneau de frein à lever.

4. Système d'anneau de frein à lever selon la revendication 3, dans lequel le diamètre intérieur de la portion cylindrique creuse représente au maximum 110 % du diamètre extérieur de l'axe de volant (2.2).

5. Système d'anneau de frein à lever selon l'une des revendications 1 à 4, dans lequel la structure (3.1) de guidage d'anneau de frein à lever est reliée ou est apte à être reliée à la première moitié (4.1) de découpleur par complémentarité de forme axiale et par complémentarité de forme radiale, la première moitié (4.1) de découpleur étant agencée de manière à être apte à être déplacée axialement le long de l'axe de volant (2.2) et/ou à être apte à tourner radialement autour de l'axe de volant (2.2).

6. Système d'anneau de frein à lever selon l'une des revendications 1 à 5, dans lequel la première moitié (4.1) de découpleur est reliée ou est apte à être reliée axialement par complémentarité de forme à la deuxième moitié (4.2) de découpleur.

7. Système d'anneau de frein à lever selon l'une quelconque des revendications 1 à 6, dans lequel la deuxième moitié (4.2) de découpleur est apte à être déplacée axialement le long de l'axe de volant (2.2) et est agencée radialement de manière statique par rapport au châssis du véhicule (2.0), la première moitié (4.1) de découpleur étant positionnée de manière à être apte à tourner radialement contre la deuxième moitié (4.2) de découpleur.

8. Système d'anneau de frein à lever selon la revendication 5 ou 7, dans lequel la deuxième moitié (4.2) de découpleur est reliée à au moins un moyen (5.0) de traction de frein, le moyen (5.0) de traction de frein étant conçu pour transmettre la course de freinage au système de freinage.

9. Système d'anneau de frein à lever selon la revendication 7 ou la revendication 8, dans lequel la deuxième moitié de découpleur (4.2) est reliée à au moins un levier de frein (5.1), le levier de frein (5.1) étant relié au moyen (5.0) de traction de frein.

10. Système d'anneau de frein à lever selon l'une des revendications 1 à 9, dans lequel le levier de frein (5.1) est en contact ponctuel avec une surface de contact périphérique (3.2) de la structure (3.1) de guidage d'anneau de frein à lever par une extrémité proximale (5.2) de levier de frein, l'extrémité proximale (5.2) de levier de frein étant agencée de façon à suivre le déplacement axial de la structure (3.1) de guidage d'anneau de frein à lever.

11. Système d'anneau de frein à lever selon la revendication 10, dans lequel la surface de contact périphérique (3.2) de la structure (3.1) de guidage d'anneau de frein à lever présente une rainure (3.3) de guidage périphérique, la rainure (3.3) de guidage périphérique étant adaptée pour supporter de manière guidée l'extrémité proximale (5.2) de levier de frein.

12. Système d'anneau de frein à lever selon l'une des revendications 1 à 11, dans lequel l'axe de volant (2.2) et/ou la surface de contact périphérique (3.2) de la structure (3.1) de guidage d'anneau de frein à lever et/ou la rainure (3.3) de guidage périphérique et/ou une face interne de la structure (3.4) de guidage d'anneau de frein à lever comprend au moins un élément formant palier (6.0) réducteur de friction.

13. Système d'anneau de frein à lever selon la revendication 12, dans lequel l'élément formant palier (6.0) réducteur de friction est formé d'une matière plastique glissante (6.1).

14. Système d'anneau de frein à lever selon la revendication 12 ou la revendication 13, dans lequel l'élément formant palier (6.0) réducteur de friction est adapté pour fournir une surface de contact ponctuelle entre la face interne de la structure (3.4) de guidage d'anneau de frein à lever et l'axe de volant (2.2).

15. Système d'anneau de frein à lever selon la revendication 14, dans lequel l'élément formant palier (6.0) réducteur de friction est formé d'au moins trois roulements à billes (6.2) agencés de manière concentrique autour de l'axe de volant (2.2).

16. Système d'anneau de frein à lever selon l'une quelconque des revendications 10 à 15, dans lequel l'extrémité proximale (5.2) de levier de frein comprend un roulement à billes (6.2) adapté pour fournir une surface de contact ponctuelle entre l'extrémité proximale (5.2) de levier de frein et la surface de contact (3.2) de la structure (3.1) de guidage d'anneau de frein à lever ou de la rainure de guidage (3.3).

17. Système d'anneau de frein à lever selon l'une des revendications 1 à 16, dans lequel le système d'anneau de frein à lever comprend au moins un moyen d'encliquetage (2.3) qui est agencé de façon à fixer de manière réversible l'anneau de frein (3.0) à lever sur le volant (2.1) une fois le levage de frein effectué.

18. Utilisation d'un système (1.0) d'anneau de frein à lever selon l'une des revendications 1 à 17 dans un véhicule pour la transmission d'une course de freinage exercée par un conducteur.
